# EUROPÄISCHE PATENTSCHRIFT

(11) **EP 0 599 870 B1**
(45) Veröffentlichungstag und Bekanntmachung des Hinweises auf die Patenterteilung: **02.11.1995**
(21) Anmeldenummer: 92915816.0
(22) Anmeldetag: 16.07.1992
(51) Int. Cl.: F03C 1/06, B60K 17/14

(54) **HYDROSTATISCHER AXIALKOLBENMOTOR FÜR DEN EINBAU IN DIE NABE EINES ANZUTREIBENDEN RADES**
HYDROSTATIC AXIAL PISTON MOTOR FOR FITTING IN THE HUB OF A DRIVEN WHEEL
MOTEUR HYDROSTATIQUE A PISTONS AXIAUX POUR LE MONTAGE DANS LE MOYEU D'UNE ROUE A ENTRAINER

(30) Priorität: 22.08.1991 DE 4127817
(43) Veröffentlichungstag der Anmeldung: 08.06.1994
(73) Patentinhaber: Brueninghaus Hydromatik GmbH, 89012 Ulm (DE); LOHMANN & STOLTERFOHT GMBH, 58455 Witten (DE)
(72) Erfinder: BECK, Josef, D-7452 Haigerloch 2 (DE); BEUTLER, Gerhard, D-7270 Nagold (DE); JAKUBOWSKI, Karl-Heinz, D-4620 Castrop-Rauxel (DE); PFORDT, Hartwig, D-5810 Witten (DE)
(74) Vertreter: Körber, Wolfhart, Dr. rer.nat.
(86) Internationale Anmeldenummer: EP9201611
(87) Internationale Veröffentlichungsnummer: WO9304281

(56) Entgegenhaltungen:
- EP-A- 0 128 104
- DE-A- 3 235 378
- FR-A- 2 431 385
- FR-A- 2 628 039
- GB-A- 1 374 752
- JP-A-59 147 154

## Beschreibung

Die Erfindung betrifft einen hydrostatischen Axialkolbenmotor verstellbaren Schluckvolumens nach dem Oberbegriff des Anspruches 1, der für den Einbau in die Nabe eines Rades zwecks Antrieb desselben vorgesehen ist.

Aus der DE-OS 27 44 936 (Fig. 1 und 2) ist ein derartiger Axialkolbenmotor bekannt, dessen Antriebszahnrad einseitig auf einem am geschlossenen Ende, d.h. am Bodenteil des Motorgehäuses nach außen ragenden Zapfen gelagert und damit ebenso wie die verbleibenden Elemente des Untersetzungsgetriebes außerhalb des Motorgehäuses angeordnet ist. Um die einseitige Lagerung des Antriebszahnrades ausreichend stabil zu gestalten, ist eine entsprechend kräftige Ausbildung des Bodenteils und des Zapfens erforderlich. Dies führt ebenso wie die Anordnung des Untersetzungsgetriebes außerhalb des Motorgehäuses und seine Abdeckung durch einen die Radnabe stirnseitig verschließenden Deckel zu höherem konstruktiven Aufwand und größeren Abmessungen. Die zur Verstellung des Schluckvolumens erforderliche Stelleinrichtung ist bei diesem bekannten Axialkolbenmotor nicht dargestellt, jedoch zeigt die DE-PS 32 35 378 eine derartige Stelleinrichtung eines für den Einbau in die Nabe eines Rades vorgesehenen Axialkolbenmotors, deren freie Zugänglichkeit von außen durch den Anschlußblock versperrt ist.

Aus der EP-A-0128 104 ist ein weiterer, jedoch gattungsfremder Axialkolbenmotor, ebenfalls ohne Stelleinrichtung bekannt, dessen Motorgehäuse an seinem dem Anschlußblock gegenüberliegenden Ende offen und dessen Abtriebswelle in einem im Anschlußblock drehbar gelagerten Steuerkörper sowie in einem außerhalb des Motorgehäuses und innerhalb der Radnabe angeordneten, mit dem Steuerkörper des Axialkolbenmotors drehfest verbundenen Planetenradträger gelagert ist, in dem mehrere Antriebszahnräder in Form von Planetenrädern einseitig auf je einem Zapfen gelagert sind. Jedes Antriebszahnrad steht mit einer Innenverzahnung der Radnabe im Eingriff, die mit einem verzahnungsfreien Teil durch das offene Ende des Motorgehäuses in dasselbe hineinragt und an dessen Innenumfang drehbar gelagert ist. Eine erste Lamellenkupplung zwischen dem Motorgehäuse und dem Planetenradträger und eine zweite Lamellenkupplung zwischen der Abtriebswelle und dem Anschlußblock ermöglichen bei entsprechender Betätigung eine Trennung der Radnabe von der Abtriebswelle.

Es ist Aufgabe der Erfindung, einen Axialkolbenmotor der eingangs genannten Art so weiterzubilden, daß der konstruktive Aufwand bei kompakteren Abmessungen verringert und die Stelleinrichtung von außen leicht zugänglich ist.

Diese Aufgabe wird durch die kennzeichnenden Merkmale des Anspruches 1 gelöst. Das Untersetzungsgetriebe ist erfindungsgemäß innerhalb des Motorgehäuses angeordnet, wodurch sich geringere axiale Abmessungen des letzteren und ebenso wie durch die beidseitige Lagerung des Antriebszahnrades im Motorgehäuse eine Reduzierung des konstruktiven Aufwandes sowie des Zapfendurchmessers oder andernfalls eine robustere Lagerung ergeben. Die Reduzierung des Zapfendurchmessers ermöglicht gegebenenfalls eine Änderung des Untersetzungsverhältnisses des Untersetzungsgetriebes. Aufgrund seiner Anordnung In dem dem Untersetzungsgetriebe gegenüberliegenden Bereich des Axialkolbenmotors kann der Anschlußblock gegenüber dem Motorgehäuse zurückgesetzt und in dem auf diese Weise geschaffenen überdeckungsfreien Bereich des Motorgehäuses die Stelleinrichtung angeordnet werden. Letztere ist somit beispielsweise zwecks Einstellung eines minimalen und/oder zur Verstellung des Schluckvolumens von außen frei zugänglich. Anschlüsse, wie etwa Leckölanschlüsse oder Anschlüsse und Steuerventile für die Stelleinrichtung bei hydraulischer Ausbildung derselben können ebenfalls im überdeckungsfreien Bereich des Motorgehäuses angeordnet werden, so daß die axiale Länge des Axialkolbenmotors im Vergleich zur andernfalls erforderlichen Anordnung der Anschlüsse am freien Stirnende des Anschlußblocks verringert ist.

Eine weitere Maßnahme zur Sicherstellung des freien Zugangs zur Stelleinrichtung besteht in der Ausbildung der Bremse als Lamellenbremse, die im Vergleich zu der Einscheibenbremse am Anschlußblock des aus der DE-OS 27 44 936 (Fig. 1) bekannten Axialkolbenmotors bei größerer Bremswirkung geringere radiale Abmessungen aufweist.

Um den Durchmesser des erfindungsgemäßen Axialkolbenmotors möglichst gering zu halten, verläuft die Stelleinrichtung vom überdeckungsfreien Bereich aus vorzugsweise schräg in Richtung der Schrägscheibe.

Weitere Merkmale und Vorteile der Erfindung ergeben sich aus den verbleibenden Unteransprüchen.

Nachstehend ist die Erfindung anhand eines bevorzugten Ausführungsbeispiels unter Bezugnahme auf die Zeichnung näher beschrieben. Es zeigen:
- Fig. 1: einen Längsschnitt des Axialkolbenmotors gemäß dem bevorzugten Ausführungsbeispiel der Erfindung,

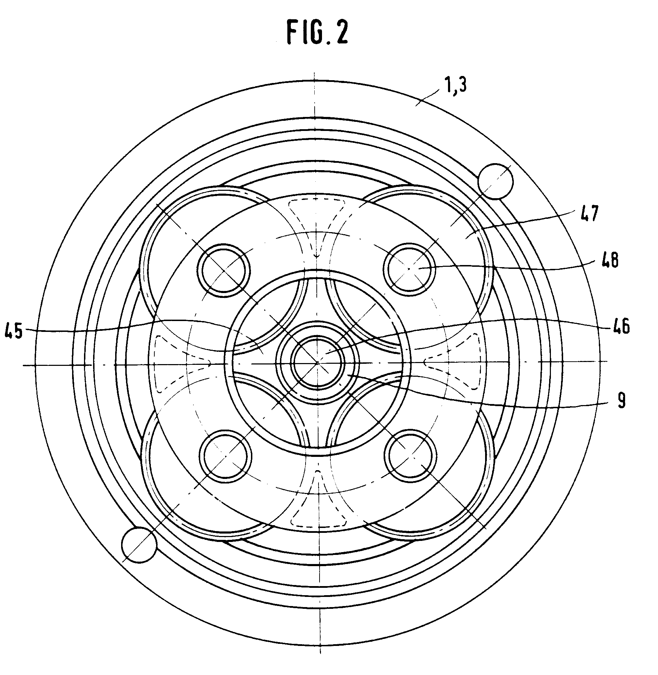

- Fig. 2: eine Draufsicht des in Figur 1 dargestellten Axialkolbenmotors, und

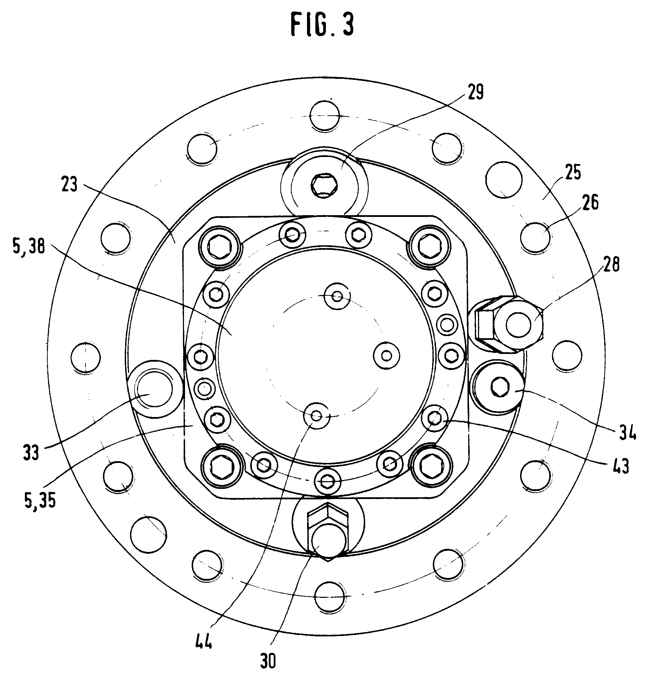

- Fig. 3: eine Unteransicht des Axialkolbenmotors nach Figur 1.

Der in der Zeichnung dargestellte Axialkolbenmotor umfaßt ein an einem Ende offenes Motorgehäuse 1 bestehend aus einer zylindrischen Gehäusewand 2 und einem Bodenteil 3, einen das offene Ende des Motorgehäuses 1 verschließenden Anschlußblock 5 mit. einem Saug- und einem Druckanschluß (beide nicht gezeigt), eine zwischen Anschlußblock 5 und Motorgehäuse 1 angeordnete Steuerscheibe 6, eine mittels Kegellagern 7, 8 im Motorgehäuse 1 und im Anschlußblock 5 drehgelagerte Abtriebswelle 9, eine drehfest auf dieser angeordnete, auf der Steuerscheibe 6 drehbar abgestützte Zylindertrommel 10, eine gegenüber dieser am Motorgehäuse 1 schwenkbar angeordnete Schrägscheibe 11, eine Verstelleinrichtung zum Verstellen des Schwenkwinkels der Schrägscheibe 11, eine am Anschlußblock 5 angeordnete Bremse 12 sowie ein Untersetzungsgetriebe 13 im gegenüberliegenden Endbereich des Motorgehäuses 1.

In der Zylindertrommel 10 sind in bekannter Weise axial verlaufende und gleichmäßig über den Umfang verteilte Zylinderbohrungen 14 ausgebildet, die über Zylinderkanäle 15 an der unteren Stirnfläche der Zylindertrommel 10 ausmünden. In der Steuerscheibe 6 sind in bekannter Weise zwei diametral gegenüberliegende Steuernieren 16 ausgebildet, die bei Drehung der Zylindertrommel 10 die Verbindung zwischen den Zylinderkanälen 15 und dem Saug- bzw. dem Druckanschluß herstellen. In den Zylinderräumen 14 verschiebbar geführte Kolben 17 stützen sich mit ihren den Zylinderkanälen 15 gegenüberliegenden Kolbenenden über Gleitschuhe 18 an der Schrägscheibe 11 ab. Eine die Abtriebswelle 9 innerhalb einer Sackbohrung in der Zylindertrommel 10 umgebende Druckfeder 19 stützt sich über axiale Stifte 20 an einem eine sphärische Außenfläche aufweisenden Ring 50 einer Rückzugseinrichtung für die Gleitschuhe 18 ab und beaufschlagt über einen in einer Ringnut in der Wandung der Sackbohrung befestigten Ring 21 die Zylindertrommel 10 in Richtung Steuerscheibe 6, um erstere in Anlage an letztere zu halten, wenn keine Öldruckkräfte auftreten.

Der Anschlußblock 5 ist von rechteckigem Querschnitt und radial gegenüber der äußeren Umfangsfläche 22 der Gehäusewand 2 im Bereich des offenen Endes des Motorgehäuses 1 zurückgesetzt. Auf diese Weise ist die die Gehäusewand 2 am offenen Ende des Motorgehäuses 1 abschließende Stirnfläche nahezu vollständig frei von der Überdeckung durch den Anschlußblock 5. Dieser überdeckungsfreie und somit von außen frei zugängliche Bereich der Stirnfläche ist mit dem Bezugszeichen 23 bezeichnet und verläuft derart radial schräg nach außen bis zur äußeren Umfangsfläche 22, daß sich sein Abstand von einer gedachten, durch den Anschlußblock 5 gelegten Ebene E quer zur Abtriebswelle 9 mit zunehmendem radialen Abstand von der Abtriebswelle 9 vergrößert.

Die Gehäusewand 2 weist in ihrem mit dem Bezugszeichen 24 bezeichneten Bereich ihres offenen Endes einschließlich des die äußere Umfangsfläche 22 aufweisenden Bereichs eine größere Wandstärke als in ihrem verbleibenden, mit dem Bezugszeichen 49 bezeichneten Bereich auf. Dieser Gehäusewandbereich 24 größerer Wandstärke umfaßt einen sich radial nach außen erstreckenden Ringflansch 25 mit Gewindebohrungen 26 , der in axialer Richtung gegenüber dem äußeren Stirnflächen-Rand 22 zurückgesetzt ist und zur Schraubbefestigung des Axialkolbenmotors an einem das anzutreibende Rad (nicht gezeigt) lagernden Teil (ebenfalls nicht gezeigt) dient. Die Innenseite der Gehäusewand 2 weist eine zum überdeckungsfreien, abgeschrägten Bereich 23 der Stirnfläche parallele Innenfläche 27 auf, die den Gehäusewandbereich 24 größerer Wandstärke mit demjenigen ge ringerer Wandstärke verbindet.

Im Gehäusewandbereich 24 größerer Wandstärke sind an Zwei einander diametral gegenüberliegenden Stellen je eine Durchgangsbohrung ausgebildet, die vom überdeckungsfreien, abgeschrägten Bereich 23 der Stirnfläche aus schräg in Richtung Schrägscheibe 11 verlaufen und an der Innenfläche 27 ausmünden.

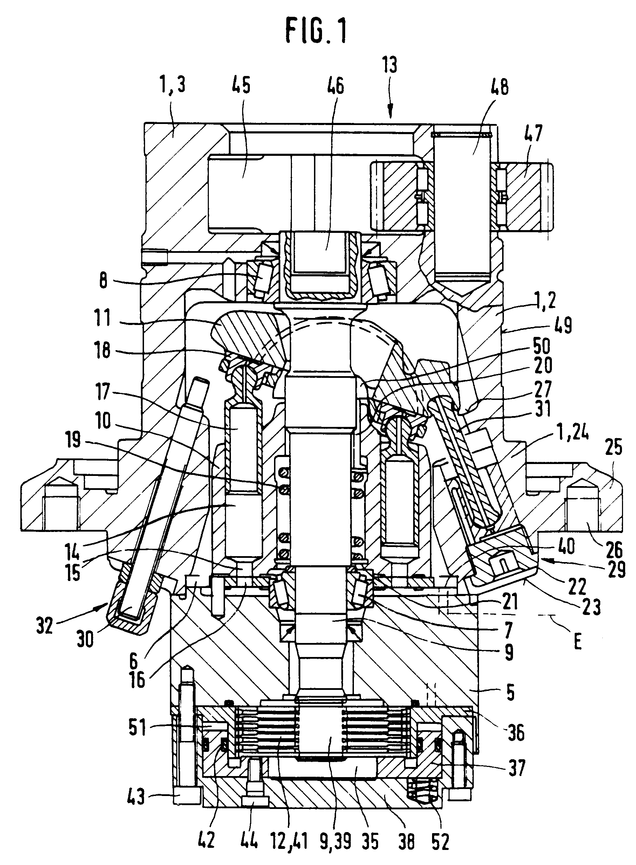

Die Stelleinrichtung ist von herkömmlicher Konstruktion und deshalb nicht näher beschrieben. Sie umfaßt eine hydraulisch mittels eines Steuerventils 28 betätigbare Stellkolbenanordnung 29 und einen Anschlagbolzen 30. Die Stellkolbenanordnung 29 durchsetzt die in Figur 1 rechte Durchgangsbohrung im Gehäusewandbereich 24 größerer Wandstärke und befindet sich mit dem freien Ende ihres Stellkolbens 31 in formschlüssigem Eingriff mit dem Randbereich der Schrägscheibe 11. Das Steuerventil 28 in Form eines 3/2-Wegeventils ist auf dem gleichen Teilkreis um 90^{o} gegenüber der Stellkolbenanordnung 29 versetzt in eine entsprechende, im überdeckungsfreien Bereich 23 der Stirnfläche ausmündende Sackbohrung im Gehäusewandbereich 24 größerer Wandstärke eingeschraubt und an eine nicht gezeigte hydraulische Leitung anschließbar. Ein nicht gezeigter hydraulischer Kanal im Gehäusewandbereich 24 größerer Wandstärke stellt die Verbindung zwischen der Sackbohrung bzw. dem darin aufgenommenen Steuerventil 28 und der Durchgangsbohrung bzw. der diese durchsetzende Stellkolbenanordnung 29 her.

Der Anschlagbolzen 30 mit einem Gewindeabschnitt ist dreh- und verschiebbar in der in Figur 1 linken Durchgangsbohrung angeordnet und weist eine größere Länge als diese auf. Mit Hilfe einer Anordnung 32 bestehend aus zwei Muttern kann der Anschlagbolzen 30 in jeder gewünschten Stellung innerhalb der Durchgangsbohrung und damit jedem gewünschten Überstand über die Innenfläche 27 festgelegt werden. Der Anschlagbolzen 30 ist auf den Randbereich der Schrägscheibe 11 gerichtet und begrenzt somit deren Schwenkbewegung. Die Schwenkstellung der Schrägscheibe 11, wenn sie am Anschlagbolzen 30 anliegt, bestimmt das jeweils eingestellte minimale Schluckvolumen des Axialkolbenmotors.

Der Gehäusewandbereich 24 größerer Wandstärke ist ferner mit zwei einander diametral gegenüberliegenden Leckölanschlüssen 33, 34 ausgebildet, deren einer neben dem Steuerventil 28 angeordnet ist.

Zur Befestigung der Bremse 12 am Anschlußblock 5 sind ein im Querschnitt L-förmiger Ring 36, ein im Querschnitt U-förmiger Bremsring 37 und eine im Querschnitt U-förmige Verschlußplatte 38 vorgesehen. Die Abtriebswelle 9 durchsetzt eine im Anschlußblock 5 ausgebildete Durchgangsbohrung und ragt aus dieser mit einem Endabschnitt 39 heraus. Der Ring 36 sitzt mit radial nach außen gerichtetem Schenkel auf der dem Motorgehäuse 1 abgewandten Seite des Anschlußblocks 5 auf und ist mit letzterem bei 40 verschraubt. Die Bremse 12 ist eine Lamellen-Trockenbremse, deren Scheiben 41 abwechselnd drehfest auf dem Endabschnitt 39 der Abtriebswelle 9 und dem axial verlaufenden Schenkel des Ringes 36 angeordnet sind. Der Bremsring 37 ist innerhalb der Verschlußplatte 38 angeordnet. Beide Elemente 37, 38 sitzen auf dem Ring 36, wobei der axial verlaufende Schenkel des Bremsringes 37 zwischen den axial verlaufenden Schenkeln des Ringes 36 und der Verschlußplatte 38 angeordnet und gegenüber diesen mittels zweier Ringdichtungen 42 luftdicht abgeschlossen ist. Die Verschlußplatte 38 liegt mit ihrem axial verlaufenden Schenkel auf dem radial verlaufenden Schenkel des Ringes 36 auf und ist gemeinsam mit letzterem durch Schrauben 43 am Anschlußblock 5 befestigt. Der vom Anschlußblock 5 und den Elementen 36, 37, 38 definierte, die Bremse 12 aufnehmende Raum 35 steht über Entlüftungsanschlüsse 44 mit der Umgebung in Verbindung. Zwischen dem radial verlaufenden Schenkel des Rings 36 und dem axial verlaufenden Schenkel des Bremsrings 37 befindet sich ein Ringraum 51, der in nicht gezeigter Weise an den internen Ölkreislauf des Axialkolbenmotors angeschlossen ist. Mehrere gespannte Bremsfedern 52 sind in entsprechenden Sackbohrungen in der Verschlußplatte 38 angeordnet und verschieben bei auf Null-Schluckvolumen eingestelltem Axialkolbenmotor den Bremsring 37 in Richtung Bremse 12, wodurch diese betätigt wird. Durch den bei In-Betriebnahme des Axialkolbenmotors aufgebauten, auch im Ringraum 51 anstehenden Öldruck wird der Bremsring 37 gegen die Kraft der Bremsfedern 52 verschoben und die Bremse 12 dadurch gelöst.

Im Bodenteil 3 des Motorgehäuses 1 ist eine Ausnehmung 45 für ein nicht gezeigtes, drehfest mit der Abtriebswelle 9 zu verbindendes Abtriebszahnrad ausgebildet. Die drehfeste Verbindung erfolgt mittels eines nicht gezeigten Zapfens, der drehfest mit dem Abtriebszahnrad verbunden und zur drehfesten Aufnahme, beispielsweise mittels Kerbverzahnungen, in einer Sackbohrung 46 im entsprechenden Endabschnitt der Abtriebswelle 9 vorgesehen ist. In die Ausnehmung 45 ragen vier mit gleichmäßigem Abstand auf einem Teilkreis angeordnete Antriebszahnräder 47 mit beidseitiger Drehlagerung auf je einem im Bodenteil 3 beidseits abgestützten Lagerzapfen 48 hinein. Diese Antriebszahnräder 47 sind sowohl für den kämmenden Eingriff mit dem Abtriebszahnrad als auch mit einer nicht gezeigten Verzahnung an der Innenseite der ebenfalls nicht gezeigten Radnabe vorgesehen.

Die Drehlagerung der Radnabe auf dem Motorgehäuse 1 erfolgt mittels eines nicht gezeigten Wälzlagers im Gehäusewandbereich 49.

## Patentansprüche

1. Hydrostatischer Axialkolbenmotor verstellbaren Schluckvolumens für den Einbau in die Nabe eines Rades zwecks Antrieb desselben, mit einem an einem Ende offenen Motorgehäuse (1), das als Nabenträger zur direkten Lagerung des anzutreibenden Rades ausgebildet ist, mit einem einen Saug - und einen Druckanschluß aufweisenden Anschlußblock (5) zum Verschließen des offenen Endes des Motorgehäuses, mit einer im Gehäuse (1) und im Anschlußblock (5) drehbar gelagerten Abtriebswelle (9), mit einer Stelleinrichtung zur Verstellung des Schluckvolumens, mit einem von der Abtriebswelle (9) angetriebenen Untersetzungsgetriebe (13), das ein Antriebszahnrad (47) für den Antrieb der Radnabe aufweist und in dem dem Anschlußblock (5) gegenüberliegenden Bereich des Axialkolbenmotors angeordnet ist, und mit einer am Anschlußblock (5) angeordneten Bremse (12) zum Abbremsen der Abtriebswelle (9),
**dadurch gekennzeichnet,**
daß das Untersetzungsgetriebe (13) innerhalb des Motorgehäuses (1, 3) mit beidseitiger Lagerung des Antriebszahnrades (47) angeordnet ist, und daß der Anschlußblock (5) gegenüber dem Motorgehäuse (1) zurückgesetzt und in dem auf diese Weise geschaffenen überdeckungsfreien Bereich (23) des Motorgehäuses (1, 2) die Stelleinrichtung (28,29,30) von außen frei zugänglich angeordnet ist.

2. Axialkolbenmotor nach Anspruch 1,
**dadurch gekennzeichnet,**
daß die Bremse als Lamellenbremse (12) ausgebildet ist.

3. Axialkolbenmotor nach Anspruch 1,
**dadurch gekennzeichnet,**
daß die Stelleinrichtung (28,29,30) vom überdeckungsfreien Bereich (23) aus schräg in den Innenraum des Motorgehäuses (1) verläuft.

4. Axialkolbenmotor nach Anspruch 1,
**dadurch gekennzeichnet,**
daß die Stelleinrichtung (28,29,30) eine von außen verstellbare Stellkolbenanordnung (29) umfaßt.

5. Axialkolbenmotor nach Anspruch 4,
**dadurch gekennzeichnet,**
daß die Stelleinrichtung (28,29,30) ein Steuerventil (28) zur hydraulischen Betätigung der Stellkolbenanordnung (29) umfaßt.

6. Axialkolbenmotor nach Anspruch 1,
**dadurch gekennzeichnet,**
daß die Stelleinrichtung (28,29,30) einen Anschlag (30) zur Bestimmung der minimalen Schluckvolumeneinstellung umfaßt.

7. Axialkolbenmotor nach Anspruch 1,
**dadurch gekennzeichnet,**
daß wenigstens ein Leckölanschluß (33,34) im überdeckungsfreien Bereich (23) des Motorgehäuses (1) von außen frei zugänglich angeordnet ist.

## Claims

1. Hydrostatic axial piston motor of adjustable swept volume for installation in the hub of a wheel for the purpose of driving the same, having a motor housing (1) which is open at one end and is formed as a hub carrier for the purpose of directly mounting the wheel which is to be driven, having a connection block (5) which has a suction and a pressure connection for closing the open end of the motor housing, having an output shaft (9) rotatably mounted in the housing (1) and in the connection block (5), having an adjusting device for adjusting the swept volume, having a step-down gear unit (13) which is driven by the output shaft (9), has a driving toothed wheel (47) for the drive of the wheel hub and is arranged in the region of the axial piston motor that lies opposite the connection block (5), and having a brake (12) arranged on the connection block (5) for braking the output shaft (9),
characterised in that
the step-down gear unit (13) is arranged inside the motor housing (1, 3) with two-sided mounting of the driving toothed wheel (47), and in that the connection block (5) is set back with respect to the motor housing (1), and in the region (23) of the motor housing (1, 2) that is created in this way and is free of covering there is the adjusting device (28, 29, 30) which is arranged so as to be freely externally accessible.

2. Axial piston motor according to claim 1,
characterised in that
the brake is formed as a multiple disk brake (12).

3. Axial piston motor according to claim 1,
characterised in that
the adjusting device (28, 29, 30) extends from the region (23) which is free of covering obliquely into the interior space of the motor housing (1).

4. Axial piston motor according to claim 1,
characterised in that
the adjusting device (28, 29, 30) comprises an adjusting piston arrangement (29) which is externally adjustable.

5. Axial piston motor according to claim 4,
characterised in that
the adjusting device (28, 29, 30) comprises a control valve (28) for hydraulic operation of the adjusting piston arrangement (29).

6. Axial piston motor according to claim 1,
characterised in that
the adjusting device (28, 29, 30) comprises a stop (30) for the determination of the minimum swept volume setting.

7. Axial piston motor according to claim 1,
characterised in that
at least one leakage oil connection (33, 34) is arranged in the region (23) of the motor housing (1) that is free of covering, so as to be freely externally accessible.

## Revendications

1. Moteur hydrostatique à pistons axiaux de volume d'entrée réglable destiné à être monté dans le moyeu d'une roue pour l'entraînement de celle-ci, avec un carter de moteur (1) ouvert à une extrémité, qui est configuré en porte-moyeu pour la suspension directe de la roue à entraîner, avec un bloc de raccordement (5) présentant un raccord d'aspiration et un raccord de pression pour la fermeture de l'extrémité ouverte du carter du moteur, avec un arbre de sortie (9) monté tournant dans le carter (1) et dans le bloc de raccordement (5), avec un dispositif de réglage pour le réglage du volume d'entrée, avec un démultiplicateur (13) entraîné par l'arbre de sortie (9), qui comporte une roue dentée d'entraînement (47) pour l'entraînement du moyeu de roue et qui est placé dans la zone située face an bloc de raccordement (5), du moteur à pistons axiaux, et avec un frein (12), placé sur le bloc de raccordement (5), pour le freinage de l'arbre de sortie (9), caractérisé en ce que le démultiplicateur (13) est placé à l'intérieur du carter du moteur (1, 3) avec suspension des deux côtés de la roue dentée d'entraînement (47), et en ce que le bloc de raccordement (5) est en retrait par rapport au carter de moteur (1) et, dans la zone (23) sans recouvrement du carter de moteur (1, 2) ainsi créée, le dispositif de réglage (28, 29, 30) est disposé librement accessible de l'extérieur.

2. Moteur à pistons axiaux selon la revendication 1, caractérisé en ce que le frein est conformé en frein à lamelles (12).

3. Moteur à pistons axiaux selon la revendication 1, caractérisé en ce que le dispositif de réglage (28, 29, 30) s'étend à partir de la zone (23) sans recouvrement, obliquement, dans l'espace intérieur du carter de moteur (1).

4. Moteur à pistons axiaux selon la revendication 1, caractérisé en ce que le dispositif de réglage (28, 29, 30) comprend un dispositif à piston de réglage (29) réglable de l'extérieur.

5. Moteur à pistons axiaux selon la revendication 4, caractérisé en ce que le dispositif de réglage (28, 29, 30) comprend une soupape de commande (28) pour l'actionnement hydraulique du dispositif à piston de réglage (29).

6. Moteur à pistons axiaux selon la revendication 1, caractérisé en ce que le dispositif de réglage (28, 29, 30) comprend une butée (30) pour la détermination du réglage minimal du volume d'entrée.

7. Moteur à pistons axiaux selon la revendication 1, caractérisé en ce qu'au moins un raccord d'huile de fuite (33, 34) est librement accessible de l'extérieur dans la zone (23) sans recouvrement du carter de moteur (1).
